# EUROPÄISCHE PATENTSCHRIFT

(11) **EP 1 550 569 B1**
(45) Veröffentlichungstag und Bekanntmachung des Hinweises auf die Patenterteilung: **25.07.2007**
(21) Anmeldenummer: 04030273.9
(22) Anmeldetag: 21.12.2004
(51) Int. Cl.: B60H 1/22, B64D 13/08

(54) **Luftverteilungssystem**
Air distribution system
Système de distribution d'air conditionné

(30) Priorität: 29.12.2003 DE 10361392
(43) Veröffentlichungstag der Anmeldung: 06.07.2005
(73) Patentinhaber: Airbus Deutschland GmbH, 21129 Hamburg (DE)
(72) Erfinder: Markwart, Michael, 25469 Halstenbeck (DE); Arnold, Klaus, 22587 Hamburg (DE); Bracker, Frank, 22765 Hamburg (DE); Lohmar, Jens, 22587 Hamburg (DE); Scherer, Thomas, 22559 Hamburg (DE); Schwan, Torsten, 25421 Pinneberg (DE)
(74) Vertreter: Kopf, Korbinian Paul

(56) Entgegenhaltungen:
- EP-A- 0 193 956
- DE-A1- 10 121 906
- US-A- 2 980 785
- US-A- 3 067 316
- US-A1- 2003 141 413

## Beschreibung

Die Erfindung betrifft eine Flugzeugkabine mit einem Luftverteilungssystem zur Homogenisierung einer Wärmelastverteilung innerhalb eines Raums,

Um die Kabinentemperatur eines Flugzeugs zu regeln, ist die Kabine üblicherweise in eine bestimmte Anzahl von Temperaturzonen unterteilt. Es ist jedoch möglich, dass die Verteilung der Wärmequellen und -senken in der Zone inhomogen ist. Dies ist beispielsweise der Fall, wenn die Sitzdichte innerhalb der Zone variiert. Eine hohe Dichte an Passagieren bildet eine Wärmequelle, während ein leerer Türbereich eine Wärmesenke darstellt. Die Folge ist, dass in Bereichen mit einer Wärmequelle sich eine wärmere Temperatur und umgekehrt in einem Bereich mit Wärmesenken eine kältere Temperatur einstellt. Eine inhomogene Temperaturverteilung innerhalb der Zone bedeutet jedoch eine Einschränkung des thermischen Komforts.

Ob es im einzelnen eine inhomogene Verteilung der Wärmequellen und -senken gibt hängt also von der individuellen Gestaltung des Sitzlayouts ab. Dieses kann für jeden Flugzeugkunden unterschiedlich aussehen.

Um der Inhomogenität der Wärmelastverteilung innerhalb einer Temperaturzone entgegenzuwirken, wird üblicherweise die Einblasmenge durch Luftauslässe an den Stellen mit zu kalter Zuluft-Temperatur reduziert, wodurch das Temperaturniveau des entsprechenden Kabinenteils angehoben wird. Ein Nachteil der Reduzierung der Luftmenge liegt jedoch darin, dass das Luftverteilungssystem neu kalibriert werden muss, was mit einem großen zeitlichen Aufwand verbunden ist.

Die DE 43 35 152 C1 offenbart ein Kabinenumluftsystem zur Klimatisierung von Rumpfeinheiten eines Passagierflugzeuges. Dieses Kabinenumluftsystem regelt den Frischluftmengenstrom inklusive die Temperaturüberwachung für den Druckrumpf eines Passagierflugzeuges und gewährt einen hohen Reinheitsgrad der klimatisierten Luft. Die Temperaturregelung erfolgt durch separate Wärmetauscher in der Zirkulationsluft.

Die DE 195 09 773 C1 offenbart ein Belüftungssystem zur Verminderung der Konzentration von Verunreinigungen im Passagierbereich, insbesondere in den Raucherzonen.

Die DE 44 25 871 C2 offenbart ein Verfahren zum Klimatisieren von zwei Passagierdecks eines Flugzeugs. Zur Temperatureinstellung werden jeweils Klimaaggregate für einen Oberdeckkreislauf und einen Hauptdeckkreislauf verwendet. In jeweiligen Klimaaggregaten wird die von den Triebwerken entnommene Zapfluft gekühlt. Die Klimaaggregate sind ferner an eine Außenluftleitung angeschlossen, um während des Betriebs die heiße Zapfluft vom Triebwerk mit Außenluft zu kühlen.

US 2003/0141413 A1 offenbart ein Umweltkontrollsystem für ein Flugzeug mit einer Hauptluftversorgung und Einzelauslässen. In die Einzelauslässe sind nahe der Hauptverteilungsleitung und fern von den tatsächlichen Auslässen zu den Schlafplätzen für die Crew Heizelemente angeordnet.

US 3,067,318 offenbart ein elektrisches Heizsystem, in dem Ventilatoren vorgesehen sind, um Luft in einen Raum einzublasen. Entfernt von den Ventilatoren, d. h. zwischen einer Hauptversorgungsleitung und den Ventilatoren sind Heizeinrichtungen vorgesehen.

Aufgabe der Erfindung ist die Schaffung eine Flugzeugkabine mit einer homogenen Temperaturverteilung.

Die Lösung der gestellten Aufgabe ist dem Patentanspruch 1 zu entnehmen. Vorteilhafte Ausgestaltungen der Erfindung sind in den Unteransprüchen angegeben.

Im folgenden werden bevorzugte Ausführungsbeispiele der Erfindung unter Bezugnahme auf die beigefügten Figuren beschrieben. Es zeigen:
Fig. 1 einen Querschnitt durch eine Flugzeugkabine;
Fig. 2 eine schematische Ansicht einer Luftverteilung in der in Fig. 1 gezeigten Flugzeugkabine;
Fig. 3 eine schematische Ansicht der Luftverteilung in der in Fig. 1 gezeigten Flugzeugkabine gemäß einem Ausführungsbeispiel der Erfindung;
Fig. 4 einen Einbauort für die Beheizung bei der in Fig. 3 gezeigten Luftverteilung; und
Fig. 5 eine Seitenansicht des in Fig. 4 gezeigten Luftauslasses von rechts.

In den Figuren werden gleiche oder ähnliche Elemente mit gleichen Bezugszeichen versehen.

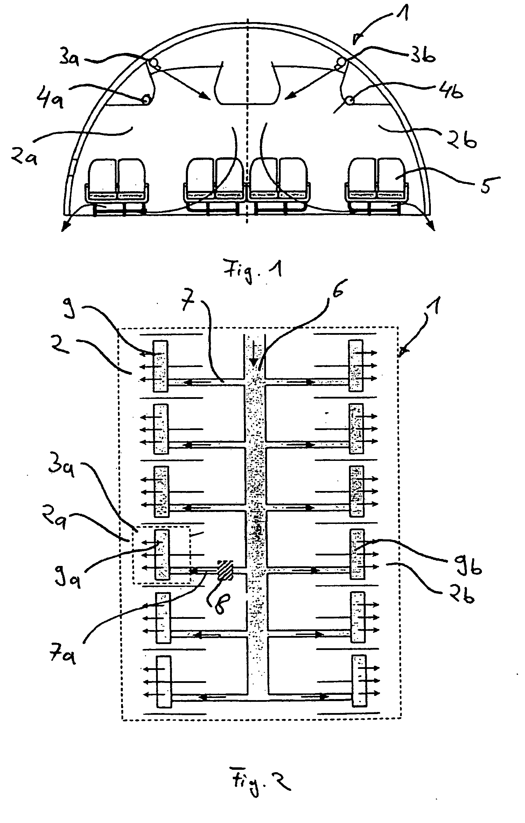

Fig. 1 zeigt einen Schnitt durch eine Flugzeugkabine 1, die in eine bestimmte Anzahl von Temperaturzonen 2 unterteilt ist. In Fig. 1 sind beispielsweise in der linken Hälfte eine erste Temperaturzone 2a und in der rechten Hälfte eine zweite Temperaturzone 2b gezeigt.

Über Luftauslässe 3 werden die Temperaturzonen 2 mit Luft versorgt. Speziell wird beispielsweise über den Luftauslass 3a Luft in die Temperaturzone 2a eingeblasen, und über den Luftauslass 3b wird Luft in die Temperaturzone 2b eingeblasen.

Die in Fig. 1 gezeigten Luftauslässe 3a, 3b sind im oberen Bereich (Deckenbereich) der Flugzeugkabine angeordnet, können jedoch an irgendeiner anderen gewünschten Stelle innerhalb der Kabine gebildet sein.

Fig. 1 zeigt ferner Sensoren 4, beispielsweise Temperatursensoren 4a, 4b, die jeweils in jeder Temperaturzone 2a, 2b im oberen Bereich (Deckenbereich) der Kabine angeordnet sind. Die Temperatursensoren können alternativ fast an beliebigen Stellen innerhalb der Temperaturzone angeordnet werden. Vorteilhaft wird der Sensor innerhalb der Temperaturzone 2 an einer Stelle positioniert, die der mittleren Temperatur der Temperaturzone (nicht Wärmelast) entspricht. Diese Temperatur resultiert natürlich aus den Wärmelasten innerhalb der Temperaturzone. Mit diesen Temperatursensoren 4a, 4b wird innerhalb einer Temperaturzone 2 die Temperatur üblicherweise an der Stelle gemessen, die der mittleren Temperatur in der Zone entspricht. Die sich einstellenden lokalen Temperaturen werden dabei durch die auftretenden Wärmelasten (Quellen und Senken) beinflusst.

Fig. 1 zeigt ferner Sitze 5, beispielsweise zur Aufnahme von Passagieren. In einem Bereich der Flugzeugkabine, in dem sich viele mit Passagieren belegte Sitze 5 befinden, ist im allgemeinen die Temperatur dieser Temperaturzone 2 größer als die Temperatur in einem Bereich der Kabine, in dem sich wenige oder keine belegten Sitzplätze 5 (eine geringe Sitzplatzdichte) befinden, beispielsweise im Bereich der Tür. Der Bereich mit vielen Sitzen stellt dann beispielsweise eine Wärmequelle dar und der Bereich an der Tür eine Wärmesenke.

Fig. 2 zeigt eine schematische Ansicht eines Luftverteilungssystems in der in Fig. 1 gezeigten Flugzeugkabine 1. Dieses Luftverteilungssystem weist eine Hauptversorgungsleitung 6 auf, über die mehrere Luftauslässe 3 mit Luft versorgt werden. In der Figur ist zur Vereinfachung der Luftauslass 3a gemäß Fig. 1 dargestellt. Jeder Luftauslass 3 ist einer bestimmten Temperaturzone 2 zugeordnet. Der Luftauslass 3a versorgt also die Temperaturzone 2a mit Luft.

Von der Hauptversorgungsleitung 6 zweigen eine Mehrzahl von Nebenversorgungsleitungen 7 ab, um die einzelnen Luftauslässe 3 jeweils mit Luft zu versorgen. Dabei ist die Luftausblasstrecke eines Luftauslasses 3 durch eine entsprechende ihn mit Luft versorgende Nebenversorgungsleitung 7 und durch eine Luftstrecke innerhalb des Luftauslasses bis zur Austrittsseite der Luft aus dem Luftauslass definiert.

Alternativ kann auch nur eine Gruppe von Luftauslässen 3 über eine einzige Nebenversorgungsleitung 7 mit der Hauptversorgungsleitung 6 in Verbindung stehen, so dass Luft über die Hauptversorgungsleitung 6 und die einzelne Nebenversorgungsleitung 7 an die Gruppe von Luftauslässen geliefert wird.

Fig. 2 zeigt ferner ein Heizelement 8, welches an der Nebenversorgungsleitung 7a ausgebildet ist, die den Luftauslass 3a mit Luft versorgt, die in die Temperaturzone 2a erwärmt eingeblasen wird, wenn das Heizelement 8 in Betrieb ist.

Das Heizelement 8 kann beispielsweise eine Heizwendel, eine elektrische Heizung oder dergleichen sein. Das Heizelement kann sich innerhalb der Nebenversorgungsleitung 7a befinden, so dass ein durch die Nebenversorgungsleitung 7a strömender Luftstrom mit dem Heizelement 8 in Kontakt kommt und dadurch in effektiver Weise erwärmt wird.

Alternativ ist es möglich, das Heizelement 8 außen auf der Nebenversorgungsleitung 7a anzubringen, so dass kein direkter Kontakt mit der in der Nebenversorgungsleitung 7a strömenden Luft zustande kommt. Dies hat den Vorteil, dass das Heizelement 8 leicht nachträglich eingebaut werden kann, ohne in das Rohrleitungssystem eingreifen zu müssen.

Die von dem Heizelement 8 erwärmte Luft wird an den Luftauslass 3a geliefert und über Luftdüsen 9a in die Temperaturzone 2a auszublasen.

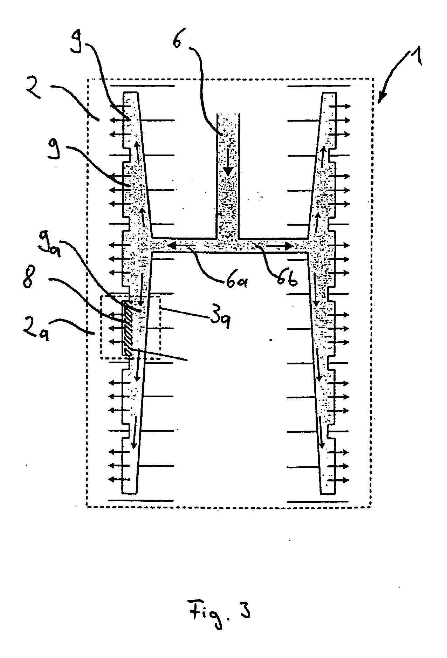

Fig. 3 zeigt eine schematische Ansicht eines Luftverteilungssystems in der in Fig. 1 gezeigten Flugzeugkabine, gemäß einem Ausführungsbeispiel der Erfindung.

Bei diesem Luftverteilungssystem zweigt sich eine Hauptversorgungsleitung 6 in eine linke Versorgungsleitung 6a und in eine rechte Versorgungsleitung 6b. Über die linke Versorgungsleitung 6a wird eine Gruppe von Luftauslässen mit Luft versorgt (in der Figur ist zur Vereinfachung lediglich ein Luftauslass 3a dargestellt), wobei die Luftauslässe untereinander direkt in Verbindung stehen, so dass eine Luftversorgung von Luftauslass zu Luftauslass sicher gestellt ist. Jeder Luftauslass 3 weist Luftdüsen 9 auf, über die Luft in eine Temperaturzone 2 ausgeblasen wird.

Im Gegensatz zu Fig. 2 befindet sich ein Heizelement 8 unmittelbar an einem Luftauslass 3a, um über Luftdüsen 9a erwärmte Luft auszublasen. Das Heizelement 8 kann beispielsweise auf der Lufteintrittsseite und/oder Luftaustrittsseite des Luftauslasses 3a mit diesem integriert ausgebildet sein, um Luft erst am Ende einer Ausblasstrecke des Luftauslasses 3a zu erwärmen. Dadurch kann ein Heizelement mit weniger Heizleistung verwendet werden, verglichen mit dem ersten Ausführungsbeispiel, bei dem Luft bereits relativ am Anfang einer Ausblasstrecke erwärmt wird.

Das Heizelement 8 kann auch separat gebildet sein und beispielsweise in die Luftdüsen 9a des Luftauslasses 3a eingesteckt werde, wodurch ein Austausch und ein nachträgliches Einbauen des Heizelements 8 sehr einfach wird.

Wie in Fig. 3 gezeigt, ist nur der Luftauslass 3a mit einem Heizelement 8 versehen, so dass nur die von diesem Luftauslass ausgeblasene Luft erwärmt ist, und in Bezug auf den Versorgungsluftstrom stromaufwärts und stromabwärts liegende Luftauslässe 3 nicht beeinflusst werden, also eine durch diese Luftauslässe ausgeblasene Luft nicht erwärmt ist.

In Fig. 2 und Fig. 3 ist jeweils beispielhaft nur ein Heizelement 8 gezeigt. Je nach Bedarf können jedoch auch mehrere Luftauslässe 3 jeweils einem Heizelement 8 oder mehreren Heizelementen 8 zugeordnet sein. Das Heizelement 8 ist vorzugsweise dann einem Luftauslass 3 zuzuordnen, um Luft in dessen Ausblasstrecke zu erwärmen, wenn dieser Luftauslass 3 in einer sogenannten Wärmesenke liegt. Eine derartige Wärmesenke kann durch einen Türbereich gebildet werden.

Zusätzlich kann das Heizelement auch standardmäßig für sämtliche Luftauslässe 3 verwendet werden, um die aus den Luftauslässen ausgeblasene Luft auf eine vorbestimmte Temperatur entsprechend zu temperieren, wobei die Heizleistung der Heizelemente unterschiedlich ausgelegt sein kann. Vorzugsweise ist die Heizleistung eines Heizelements, welches sich im Bereich einer Wärmesenke befindet, größer als die eines Heizelements, welches sich im Bereich einer Wärmequelle befindet. Eine Wärmequelle wird beispielsweise durch eine hohe Dichte an Passagieren gebildet.

Das Heizelement 8 kann beispielsweise eine Heizwendel, eine elektrische Heizung oder dergleichen sein, dessen Heizleistung beispielsweise konstant oder einstellbar ist.

Vorzugsweise wird die Heizleistung mit Hilfe des in Fig. 1 gezeigten Temperatursensors 4 (Sensoren 4a und/oder 4b) derart geregelt, dass die Ausblasstrecke eines Luftauslasses beheizt wird, um zu kalte Bereiche an das Temperaturniveau des Sensorpunktes anzuheben.

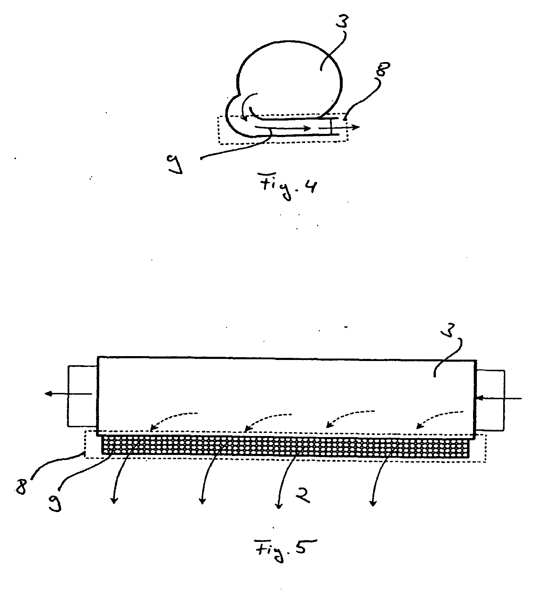

Fig. 4 zeigt einen möglichen Einbauort für das Heizelement 8.

Gemäß diesem Ausführungsbeispiel ist das Heizelement 8 an der Luftaustrittsseite des Luftauslasses 3 ausgebildet, so dass die durch die Luftdüse 9 ausgeblasene Luft erwärmt ist. Es kann jedoch auch an einer Lufteintrittsseite des Luftauslasses 3 ausgebildet werden.

Wenn der Luftauslass 3 mehrere Luftdüsen 9 aufweist, ist es möglich, dass sich das Heizelement 8 nur über einen Teil der Luftdüsen 9 erstreckt.

Fig. 5 zeigt eine Seitenansicht des in Fig. 4 gezeigten Auslasses von rechts. Wie in Fig. 5 gezeigt, wird der Luftauslass 3 von rechts mit Luft beliefert, die zum Teil über die Luftdüsen 9 nach unten austritt und zum Teil nach links weiterströmt, um beispielsweise die in Fig. 3 gezeigten stromabwärts liegenden Luftauslässe zu versorgen. Der von dem Versorgungsluftstrom nach unten abzweigende Luftausblasstrom (also die Luftausblasstrecke) wird durch das unmittelbar am Luftauslass 3 ausgebildete Heizelement 8 erwärmt, so dass erwärmte Luft in eine entsprechende Temperaturzone 2, die diesem Luftauslass 3 zugeordnet ist, ausgeblasen wird.

Die Ausblasstrecke des Luftauslasses 3 wird also durch das Heizelement 8 beheizt, so dass erwärmte Luft in eine Temperaturzone 2 geblasen wird.

## Patentansprüche

1. Flugzeugkabine mit einem Luftverteilungssystem, wobei das Luftverteilungssystem eine Hauptversorgungsleitung (6),
eine Mehrzahl von Luftauslässen (3), die über Nebenverteilungsleitungen (7) an die Hauptverteilungsleitung (6) angeschlossen sind und
mindestens ein Heizelement (8) aufweist,
**dadurch gekennzeichnet, daß**
das mindestens eine Heizelement unmittelbar an einem der Luftauslässe (3) angeordnet ist zur Temperierung der Luft an der Luftaustrittsseite dieses Luftauslasses;
wobei das mindestens eine Heizelement (8) im Bereich einer Tür in der Kabine angeordnet ist.

2. Flugzeugkabine mit einem Luftverteilungssystem nach Anspruch 1, bei dem eine Luftversorgung von Luftauslass (3) zu Luftauslass (3) sichergestellt ist.

3. Flugzeugkabine mit einem Luftverteilungssystem nach einem der vorangegangenen Ansprüche, bei dem das Heizelement (8) eine konstante einstellbare Heizleistung aufweist.

4. Flugzeugkabine mit einem Luftverteilungssystem nach Anspruch 1 oder 2, mit mindestens einem Temperatursensor (4a, 4b) mit dem die Heizleistung des Heizelements (8) auf einen vorbestimmten Wert regelbar ist.

5. Flugzeugkabine mit einem Luftverteilungssystem nach einem der vorangegangenen Ansprüche, bei dem die in dem Luftverteilungssystem fließende Luftmenge im wesentlichen konstant bleibt.

## Claims

1. Cabin of an aircraft with an air dispersion system, said air dispersion system comprising:
a main supply line (6),
a plurality of air outlets (3) connected to the main supply line (6) via auxiliary supply lines (7) and
at least one heating element (8),
**characterized in that**
said at least one heating element being located directly at one of the air outlets (3) for tempering the air at the air outlet side of this air outlet;
said at least one heating element (8) being located in the area of a door in the cabin.

2. The cabin of an aircraft with an air dispersion system according to claim 1,
wherein an air supply is ensured from air outlet (3) to air outlet (3).

3. The cabin of an aircraft with an air dispersion system according to one of the preceding claims, wherein said heating element (8) features an adjustable constant heat output.

4. The cabin of an aircraft with an air dispersion system according to claim 1 or claim 2, comprising at least one temperature sensing element (4a, 4b) arranged to control said heat output of said heating element (8) to a predetermined value.

5. The cabin of an aircraft with an air dispersion system according to one of the preceding claims, wherein the air quantity flowing in said air dispersion system remains substantially constant.

## Revendications

1. Cabine d'avion comportant un système de distribution d'air, dans lequel le système de distribution d'air comporte
une ligne d'alimentation principale (6),
une pluralité de sorties d'air (3) qui sont raccordées à la ligne de distribution principale (6) par l'intermédiaire de lignes de distribution secondaires (7) et
au moins un élément chauffant (8)
**caractérisé en ce que**
le au moins un élément chauffant est disposé directement sur l'une des sorties d'air (3) afin de chauffer l'air sur le côté de sortie d'air de cette sortie d'air ;
le au moins un élément chauffant (8) étant disposé dans la zone d'une porte, dans la cabine.

2. Cabine d'avion comportant un système de distribution d'air selon la revendication 1, dans lequel une alimentation en air est assurée de sortie d'air (3) à sortie d' air (3).

3. Cabine d'avion comportant un système de distribution d'air selon l'une des revendications précédentes, dans lequel l'élément chauffant (8) présente une puissance de chauffage constante, réglable.

4. Cabine d'avion comportant un système de distribution d'air selon la revendication 1 ou 2, et au moins un capteur de température (4a, 4b) avec lequel la puissance de chauffage de l'élément chauffant (8) peut être régulée sur une valeur prédéterminée.

5. Cabine d'avion comportant un système de distribution d'air selon l'une des revendications précédentes, dans lequel la quantité d'air arrivant dans le système de distribution d'air demeure sensiblement constante.
